# DEMANDE DE BREVET EUROPEEN

(11) **EP 4 478 570 A1**
(43) Date de publication de la demande: **18.12.2024**
(21) Numéro de dépôt: 24175447.2
(22) Date de dépôt: 13.05.2024
(51) Int. Cl.: H02J 3/14, H02J 13/00

(54) **SYSTEME DE PILOTAGE CENTRALISE DE L'ALIMENTATION ELECTRIQUE D'EQUIPEMENTS DU TERTIAIRE**

(30) Priorité: 11.05.2023 FR 2304671
(71) Demandeur: Thevelec, 69240 Thizy-les-Bourgs (FR)
(72) Inventeur: THEVENIN, Lionel, 42840 COMBRE (FR)
(74) Mandataire: Cabinet Laurent & Charras

(57) **Abrégé**

Système de pilotage centralisé de l'alimentation électrique d'équipements électriques de puissance installés dans un local professionnel du secteur tertiaire, comprenant :
- des contacteurs de puissance (3), chacun étant destiné à être connecté au circuit électrique d'un équipement à piloter, pour autoriser ou interrompre le l'alimentation électrique de l'équipement correspondant, à réception d'un signal électrique de commande ;
- une unité de pilotage (1) comprenant une interface utilisateur (10) pour la saisie par un utilisateur de plannings horaires de fonctionnement des équipements, une unité de mémorisation (11) de ces paramètres, une unité centrale (12) pour générer un signal de pilotage fonction des plannings horaires mémorisés ;
- une unité de commande (2) en communication avec l'unité centrale (10), connectée électriquement à chacun des contacteurs de puissance (3), et configurée pour recevoir le signal de pilotage, et envoyer un signal de commande aux contacteurs (3) en fonction du signal de pilotage, pour commander l'ouverture ou la fermeture des contacteurs.

## Description

### Domaine technique

La présente invention se rapporte à un système de pilotage centralisé de l'alimentation électrique des équipements électriques installés dans un local professionnel du secteur tertiaire, tel que le secteur de la restauration.

### Technique antérieure

Typiquement, dans le domaine de la restauration, les équipements électriques de cuisson tels que friteuse, grill, etc, ou de production d'eau chaude tel que les cumulus, sont généralement démarrés, et donc alimentés électriquement, dès la prise de service du manager, et restent continuellement alimentés électriquement tout au long de la journée.

Dans le cas particulier de la restauration rapide, il est d'usage de maintenir un service continue tout au long de la journée, le service pouvant par exemple s'étendre de 9h00 à minuit. Or, l'affluence clientèle varie tout au long de la journée. Cette variation se traduit généralement par des périodes dites de « rush » au cours desquelles tous les équipements électriques nécessaires à l'activité du restaurant (plaques, grills, friteuses, cumulus, les systèmes de ventilation VMC etc.) sont sollicités, entrecoupées de périodes dites « creuses » au cours desquelles seul quelques équipements sont réellement utilisés, ou ont réellement besoin d'être laissés en fonctionnement.

De ce fait et compte tenu de la crise énergétique et de l'augmentation du prix de l'électricité, il existe actuellement un besoin pour limiter la consommation électrique des équipements du secteur tertiaire.

Ainsi, partant du constat qu'en fonction des moments de la journée et des jours de la semaine, tous les équipements électriques n'ont pas besoin d'être alimentés électriquement en continue, une solution simple mais fastidieuse, consisterait à allumer et à éteindre manuellement chaque appareil électrique identifié en actionnant manuellement chaque bouton marche/arrêt du tableau électrique associé à l'appareil identifié.

Il existe sur le marché des programmateurs horaire pour prise électrique, ou prises intelligentes, qui laissent passer le courant en fonction de la ou des plages horaires de fonctionnement choisie(s). Une telle solution n'est nullement adaptée au secteur tertiaire puisque ces prises intelligentes ne sont généralement pas adaptées pour supporter les fortes puissances des équipements utilisés dans les cuisines professionnelles et ne répondent pas aux normes de sécurité électriques en vigueur.

Concernant les solutions spécifiques au secteur du tertiaire, et notamment les solutions adaptées pour les niveaux de puissance électrique mis en jeu pour le fonctionnement des équipements électriques installés, il existe des interrupteurs horaires programmables à installer directement dans le tableau électrique de distribution. Il est néanmoins nécessaire de programmer ces interrupteurs manuellement via des boutons ou via un ordinateur. En outre, ces interrupteurs programmables restent coûteux et il est nécessaire d'acquérir et d'installer autant d'interrupteurs programmables que d'appareils de puissance à contrôler. Une telle installation peut ainsi être très onéreuse.

### Exposé de l'invention

Dans ce contexte, la présente invention vise donc à proposer une solution alternative pour gérer les horaires de fonctionnement des équipements électriques installés dans un local professionnel du secteur tertiaire, afin de réduire la consommation électrique de ces équipements.

Par exemple, l'invention trouve une application particulièrement adaptée pour le secteur de la restauration, dans lequel il est intéressant d'adapter la mise sous tension de tout ou partie des appareils énergivores, tels que friteuse, grill, cumulus, en fonction notamment des heures d'affluence, de manière à réduire leur consommation électrique.

En particulier, la présente invention vise à proposer une solution simple mais néanmoins efficace, permettant une programmation centralisée des plages horaires de mise sous tension ou d'arrêt de ces appareils.

L'invention a ainsi pour objet un système de pilotage centralisé de l'alimentation électrique d'une pluralité d'équipements électriques de forte puissance installés dans un local professionnel du secteur tertiaire.

Le système de pilotage de l'invention comprend au moins :
- une pluralité de contacteurs de puissance, chaque contacteur de puissance étant destiné à être connecté à l'un des équipements parmi ladite pluralité d'équipements électriques à piloter, de manière à autoriser ou à interrompre l'alimentation électrique de l'équipement correspondant à réception d'un signal électrique de commande, et chaque contacteur est également avantageusement connecté au disjoncteur associé à l'équipement à piloter ;
- une unité de pilotage comprenant au moins:
   . une interface utilisateur incluant des moyens de saisie par un utilisateur de paramètres de fonctionnement, ces paramètres incluant au moins un planning horaire de fonctionnement pour chacun des équipements à piloter, au moins pour chacun des jours de la semaine, et un écran d'affichage d'informations à destination de l'utilisateur;
   . une unité de mémorisation de ces paramètres de fonctionnement ;
   . une unité centrale de traitement configurée pour générer au moins un signal de pilotage indiquant pour chacun des équipements à piloter, le fonctionnement ou l'arrêt dudit équipement à piloter, en fonction au moins des plannings horaires mémorisés, du jour actuel de la semaine, et de l'heure actuelle ;
- une unité de commande en communication avec l'unité centrale, et connectée électriquement à chacun des contacteurs de puissance, l'unité de commande étant configurée pour :
   . recevoir le signal de pilotage généré par l'unité centrale ;
   . envoyer un signal de commande à chacun des contacteurs en fonction du signal de pilotage, de manière à commander l'ouverture ou la fermeture de chaque contacteur de puissance.

Ainsi, le système de l'invention permet un pilotage centralisé de la mise sous tension et de l'arrêt de chacun des équipements électriques via la commande d'ouverture/fermeture de contacteurs de puissance raccordés aux circuits électriques des équipements, et ce en fonction uniquement des plages horaires définies par l'opérateur. La solution de l'invention est de conception simple, facile à mettre en oeuvre et facile d'utilisation pour un opérateur, par exemple le manager du restaurant.

On entend par fonctionnement d'un équipement électrique, l'alimentation électrique dudit équipement. Le planning horaire de fonctionnement indique les plages horaires pour lesquelles l'opérateur souhaite que l'équipement concerné doit être alimenté électriquement. Il est donc possible de définir plusieurs plages horaires par jour et par appareil. Le planning horaire de fonctionnement peut être journalier, hebdomadaire ou encore mensuel. Ainsi, l'unité de mémorisation peut stocker l'ensemble de ces paramètres pour chaque équipement à piloter sous la forme d'un tableau ou d'un calendrier.

En pratique, le contacteur de puissance est monté entre l'équipement à piloter et le disjoncteur associé. Chaque contacteur est donc destiné à être positionné en aval d'un disjoncteur. En outre, le contacteur de puissance mis en oeuvre dans l'invention est avantageusement un contacteur de puissance dit « classique » ou « traditionnel », tel qu'un contacteur jour/nuit, qui ne répond qu'à un signal électrique de commande d'ouverture ou de fermeture du circuit, sous la forme d'un passage de courant dans l'étage de commande du contacteur. En d'autres termes, le contacteur mis en oeuvre dans la présente invention est avantageusement non programmable et ne présente pas les fonctionnalités d'un contacteur dit « intelligent ». Contrairement à un disjoncteur, un contacteur jour/nuit peut être réenclencher plusieurs fois par jours sans risque d'usure prématuré, le contacteur jour/nuit pouvant supporter un million de cycles d'ouverture/fermeture.

L'invention permet ainsi de contrôler l'ouverture et la fermeture de contacteurs « classique jour/nuit » de puissance associés aux équipements de puissance, sur la base du planning horaire avec possibilité de mettre les appareils en marche forcé directement sur l'écran et individuellement ainsi qu'une sélection des jours de fonctionnement (activable et désactivable) pour chaque jour et chaque appareil. L'invention permet un respect automatique des plans d'allumage et d'extinction de tous les appareils électriques souhaités de manière centralisée.

Dans une variante, l'unité de pilotage peut être configurée pour ignorer ou interdire toute commande d'utilisateur de mise sous tension des appareils en dehors du plan d'allumage. En d'autres termes, l'action humaine relative à l'allumage ou à la mise sous tension des appareils à piloter n'est pas prioritaire au plan d'allumage. A l'inverse, l'unité de pilotage peut permettre l'ouverture des contacteurs de puissance non prévue par le plan horaire mais initiée par l'utilisateur via l'interface utilisateur de manière à forcer l'arrêt de l'appareil. En d'autres termes, l'unité de pilotage peut autoriser l'arrêt forcé des appareils en dehors du plan horaire en réponse à une commande utilisateur, mais interdit la mise sous tension des appareils lorsque cette mise sous tension forcée n'est pas prévue par le plan d'allumage.

Dans une autre variante, l'unité de pilotage peut néanmoins être configurée pour autoriser la mise sous tension forcée des appareils, et donc la fermeture forcée de tout ou partie des contacteurs, en dehors du plan d'allumage défini. La disponibilité de cette fonction de mise sous tension forcée peut être soumise à une vérification préalable d'un niveau d'autorisation de l'utilisateur.

En pratique, les contacteurs de puissance peuvent être disposés dans un tableau général basse tension TGBT existant du local professionnel, contenant généralement au moins des disjoncteurs associés aux équipements électriques installés. Cette configuration est particulièrement avantageuse lorsque le TGBT dispose d'emplacements libres pour recevoir ces contacteurs de puissance. Dans une variante, les contacteurs de puissance peuvent être disposés dans un coffret annexe au TGBT. Les contacteurs de puissance sont de type avec commande manuelle intégrée, afin de permettre à l'opérateur d'actionner manuellement le contacteur en cas de panne du système de pilotage de l'invention.

Avantageusement, l'unité de pilotage et l'unité de commande peuvent être sous la forme d'un automate programmable industriel (PLC ou API). L'utilisation d'un automate industriel offre l'avantage de disposer d'un système modulable capable de piloter une large gamme et grand nombre d'appareils électriques, sans engendrer de coût trop important. Par exemple, le système de l'invention peut être dimensionné en fonction du nombre d'appareils à piloter. Le système de l'invention peut ainsi permettre de piloter plus de 80 appareils électriques identiques et/ou différents.

En pratique, on distingue deux catégories d'automates : les automates dits « compacts » qui ont une alimentation électrique ainsi que des entrées/sorties intégrées, et les automates dits « modulaires » qui nécessitent des modules séparés pour assurer leur alimentation électrique ainsi que pour ajouter des entrées/sorties supplémentaires.

Ainsi, dans un mode de réalisation, l'unité de pilotage peut être constitué par un automate modulaire, et l'unité de commande peut être constitué par un module d'entrée/sortie déportée de l'unité de pilotage. Dans cette configuration, le module d'entrée/sortie (également appelé « tête de station ») ainsi que les contacteurs de puissance peuvent être disposés dans un coffret annexe au TGBT.

En pratique, le module d'entrée/sortie formant l'unité de commande peut générer un signal de commande sous la forme d'une tension de commande adaptée pour l'actionnement direct des contacteurs de puissance. Dans le cas où la tension du signal de commande en sortie du module d'entrée/sortie n'est pas adaptée, des relais peuvent être disposés à l'interface des sorties du module d'entrée/sortie et des contacteurs de puissance de manière à adapter la tension du signal de commande généré par le module d'entrée/sortie en une tension de commande adaptée pour l'actionnement des contacteurs de puissance. L'ensemble module d'entrée/sortie, relais et contacteurs de puissance peuvent ainsi être disposés dans un même coffret annexe au TBGT.

Par ailleurs, lorsque l'unité de commande est déportée de l'unité de pilotage, la communication entre l'unité de commande et l'unité de pilotage peut être réalisée via une liaison filaire supportant un protocole de communication industriel, par exemple le protocole de type Ethernet industriel, Modbus, Profibus, EtherCAT, etc. Par exemple, la liaison filaire peut être assurée via un câble réseau comme par exemple un câble RJ45. En théorie, une liaison radio peut également être envisagée, mais cette solution est considérée comme moins fiable car le signal radio peut être soumis à des perturbations dues à des interférences pouvant être engendrées par des appareils électriques, tel que micro-ondes par exemple.

Dans le cas de l'utilisation d'un automate modulaire, le système de l'invention peut en outre comprendre au moins un module d'alimentation électrique pour le module de pilotage et/ou le module de commande. Ce module d'alimentation peut être sous la forme d'une alimentation à découpage générant une tension adaptée au fonctionnement de l'unité de pilotage et/ou de l'unité de commande.

L'interface utilisateur peut avantageusement présenter des moyens permettant à l'utilisateur d'indiquer à l'unité de pilotage de forcer l'alimentation électrique de ces équipements en cas de besoin. En d'autres termes, de ne pas tenir compte des planning horaires prédéfinis de tout ou partie des équipements électriques.

En pratique, le secteur tertiaire est celui de la restauration et les équipements à piloter comprennent tout ou partie des équipements électriques installés dans un restaurant, tels que par exemple : friteuse, extracteur d'air VMC, cumulus, machine à glaçon, éclairage de salle, grill, station de séchage de vaisselles, table de cuisson.

### Brève description des figures

D'autres caractéristiques et avantages de l'invention ressortiront clairement de la description qui en est faite ci-après, à titre indicatif et nullement limitatif, en référence au dessin annexé :

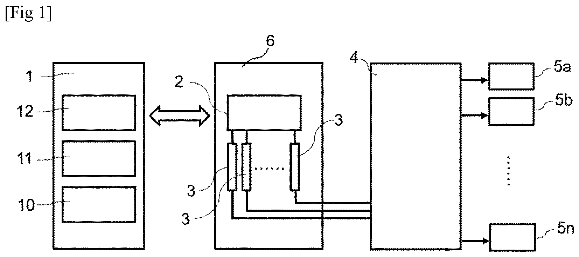

La figure 1 est un schéma simplifié du système de pilotage selon un mode de réalisation de l'invention.

On notera que seuls les éléments indispensables à la compréhension de l'invention sont représentés sur la figure pour des raisons de clarté.

### Description détaillée de l'invention

Le système de pilotage centralisé de l'alimentation des équipements électrique de puissance installés dans un local professionnel du secteur tertiaire est illustré à la figure 1. A titre d'exemple le système de pilotage de l'invention est mis en oeuvre dans un local de restauration rapide.

Le système de pilotage illustré à la figure 1 comprend une unité de pilotage **1** en communication avec une unité de commande **2** pour la commande de l'actionnement L'ensemble des contacteurs de puissance **3.**

Chaque contacteur de puissance **3** est destiné à être connecté au circuit électrique d'un équipement parmi la pluralité d'équipements électriques à piloter, de manière à autoriser ou à interrompre l'alimentation électrique de l'équipement correspondant à réception d'une tension de commande. Les contacteurs de puissance sont de préférence type avec commande manuelle intégrée, afin de permettre à un opérateur, par exemple le responsable ou le manager du restaurant, d'actionner manuellement le contacteur en cas de panne du système de pilotage centralisée. Dans le mode de la réalisation illustré à la figure 1, les contacteurs de puissance **3** sont disposés dans un coffret annexe **6** au tableau général basse tension TGBT **4** existant du local professionnel, contenant généralement les disjoncteurs associés aux équipements électriques installés. Dans une variante, ces contacteurs de puissance peuvent être disposés dans l'armoire TGBT, fixés aux rails DIN, lorsque l'armoire TGBT dispose d'emplacements libres pour recevoir ces contacteurs de puissance **3.**

Les équipements électriques de puissance **5a-5n** installés dans le local professionnel sont raccordés au tableau TGBT **4.** De tels équipements sont par exemple des friteuses, des extracteurs d'air VMC, un cumulus, des machines à glaçon, les éclairages de salle, des grills, des stations de séchage de vaisselles, des tables de cuisson, etc.

L'unité de pilotage **1** intègre notamment une interface utilisateur **10** incluant des moyens de saisie par un utilisateur de paramètres de fonctionnement de chaque équipement électrique à piloter. Les moyens de saisie peuvent être sous la forme d'un clavier virtuel, et les paramètres de fonctionnement consistent notamment en un planning horaire de fonctionnement pour chacun des équipements à piloter, pour chacun des jours de la semaine.

Ces paramètres de fonctionnement sont mémorisés dans une unité de mémorisation **11** de l'unité de pilotage **1,** par exemple sous la forme de tableau ou de calendrier.

L'interface utilisateur **10** intègre en outre un écran d'affichage d'informations à destination de l'utilisateur, permettant par exemple d'afficher les plannings horaire journalier des équipements électriques à piloter. L'interface utilisateur **10** peut également être configuré pour afficher des boutons virtuels représentatifs de commandes prédéfinies, par exemple pour permettre à l'opérateur de forcer l'arrêt, ou la mise de tension de tout ou partie des équipements électriques.

L'unité de pilotage **1** intègre en outre une unité centrale **12** de traitement configurée pour générer un signal de pilotage indiquant pour chacun des équipements à piloter, le fonctionnement ou l'arrêt de l'équipement à piloter, suivant les plannings horaires mémorisés, en tenant compte du jour actuel ainsi que de l'heure actuelle. En pratique, l'unité centrale est dotée d'une horloge interne donnant les dates et heures actuelles.

L'unité de commande **2** communique avec l'unité centrale **10,** est connectée électriquement à chacun des contacteurs de puissance **3,** et est configurée pour recevoir le signal de pilotage généré par l'unité centrale **10,** et pour envoyer un signal de commande de tension adaptée à chacun des contacteurs de puissance **3** en fonction du signal de pilotage reçu, de manière à commander individuellement l'ouverture ou la fermeture de tout ou partie des contacteurs de puissance **3.**

En pratique, l'unité de pilotage 1 et l'unité de commande **2** sont sous la forme d'un automate programmable industriel (PLC ou API). L'unité de commande **2** peut être constituée par un module d'entrée/sortie déportée de l'unité de pilotage **1,** et peut ainsi être disposé dans le coffret annexe **6.** L'unité de commande **2** communique ou dialogue avec l'unité de pilotage **1** via une liaison filaire supportant un protocole de communication industriel, par exemple le protocole de type Ethernet industriel. Cette liaison filaire peut être assurée via un câble réseau tel qu'un câble RJ45.

Lorsque l'automate programmable n'intègre pas une alimentation, une alimentation électrique de type alimentation à découpage 24VDC (non représentée) peut être disposée dans le coffret pour être reliée aux entrées des digitales du module entrée/sortie **2.** Cette alimentation peut également être intégrée dans le coffret annexe **6.**

Typiquement, les sorties digitales du module d'entrée/sortie **2** peuvent être de plusieurs types, à savoir notamment transistors, relais ou triacs.

Les sorties de type relais sont préférées car elles permettent un actionnement direct par tension de commande DC des contacteurs de puissance, et sont moins sensibles aux variations et pics de tensions. Les sorties digitales de type relais sont capable de générer des signaux de tension typiquement 220-240VDC, adaptée pour l'actionnement des contacteurs de puissance **3.** Ainsi, dans une variante, le module d'entrée/sortie **2** peut intégrer des cartes de sorties relais permettant d'actionner directement les contacteurs de puissance directement en 230V.

Les sorties digitales de type transistors peuvent également être utilisées, mais la tension générée en sortie n'est généralement pas suffisante pour permettre l'actionnement des contacteurs de puissance **3.** Ainsi, dans le cas de module d'entrée/sortie **2** avec sortie digitales de type transistors, il est nécessaire de prévoir des relais d'interface pour adapter la tension de commande en sortie du module d'entrée/sortie en une tension adaptée pour l'actionnement des contacteurs de puissance. Par exemple des relais d'interface 24VDC peuvent être prévus dans le coffret annexe **6** afin d'actionner les contacteurs de puissance en 230V.

En utilisation, l'opérateur peut, au moyen de l'interface utilisateur, définir par exemple :
- les équipements de puissance à piloter, le planning horaire (journalier, hebdomadaire, mensuel ou annuel) de fonctionnement de chacun des équipements électriques de puissance à piloter ;
- la périodicité des plannings horaires ;
- des exceptions (par exemple lors des périodes de fermeture forcée ou de périodes exceptionnelles d'affluence suivant une ou des dates particulières de l'année).

En d'autres termes, l'opérateur peut planifier les périodes de démarrage ou d'arrêt des équipements électriques, et définir des scénarios de fonctionnement. Par exemple, l'opérateur peut décider qu'un équipement peut être autorisé à fonctionner uniquement certains jours de la semaine, que certains équipements doivent obligatoirement être arrêtés après une certaine heure (par exemple les éclairages la nuit).

Il est possible de prévoir, via l'écran d'affichage, un visuel général visible en permanence, et notamment sans mot de passe, afin que l'utilisateur puisse être informé des équipements autorisés à fonctionner, ainsi que les plages horaires correspondant au jour actuel. Il est également possible de prévoir un accès par mot de passe pour empêcher l'accès au système ou la modification des plages horaires de fonctionnement par une personne non autorisée.

Le système de pilotage présenté permet ainsi une programmation centralisée de la mise sous tension ou de l'arrêt des équipements électriques installés dans un local professionnel, ce qui permet de limiter la consommation électrique journalière des équipements électriques en échelonnant la mise en service des appareils énergivores.

## Revendications

1. Système de pilotage centralisé de l'alimentation électrique d'une pluralité d'équipements électriques de forte puissance installés dans un local professionnel du secteur tertiaire, **caractérisé en ce que** le système de pilotage comprend au moins :
- une pluralité de contacteurs de puissance (3), chaque contacteur de puissance (3) étant destiné à être connecté à l'un des équipements parmi ladite pluralité d'équipements électriques à piloter, de manière à autoriser ou à interrompre l'alimentation électrique de l'équipement correspondant, à réception d'un signal électrique de commande ;
- une unité de pilotage (1) comprenant au moins:
. une interface utilisateur (10) incluant des moyens de saisie par un utilisateur de paramètres de fonctionnement, lesdits paramètres incluant au moins un planning horaire de fonctionnement pour chacun des équipements à piloter, au moins pour chacun des jours de la semaine, et un écran d'affichage d'informations à destination de l'utilisateur;
. une unité de mémorisation (11) de ces paramètres de fonctionnement ;
. une unité centrale (12) de traitement configurée pour générer au moins un signal de pilotage indiquant pour chacun des équipements à piloter, le fonctionnement ou l'arrêt dudit équipement à piloter, en fonction au moins des plannings horaires mémorisés, du jour actuel de la semaine, et de l'heure actuelle ;
- une unité de commande (2) en communication avec l'unité centrale (10), et connectée électriquement à chacun des contacteurs de puissance (3), l'unité de commande (2) étant configurée pour :
. recevoir le signal de pilotage généré par l'unité centrale (10) ;
. envoyer un signal de commande à chacun des contacteurs (3) en fonction du signal de pilotage, de manière à commander l'ouverture ou la fermeture de chaque contacteur de puissance (3).

2. Système de pilotage centralisé selon la revendication 1, dans lequel les contacteurs de puissance (3) sont disposés dans un tableau général basse tension TGBT (4) existant du local professionnel, contenant au moins des disjoncteurs associés aux équipements électriques installés.

3. Système de pilotage centralisé selon la revendication 1, dans lequel les contacteurs de puissance (3) sont disposés dans un coffret annexe (6) au tableau TGBT (4).

4. Système de pilotage centralisé selon l'une des revendications 1 à 3, dans lequel l'unité de pilotage (1) et l'unité de commande (2) sont sous la forme d'un automate programmable industriel.

5. Système de pilotage centralisé selon la revendication 4, dans lequel l'unité de pilotage (1) est constituée par un automate modulaire, et l'unité de commande (2) est constitué par un module d'entrée/sortie déportée de l'unité de pilotage (1) et configurée pour générer un signal de commande sous la forme d'une tension de commande adaptée pour l'actionnement direct des contacteurs de puissance (3).

6. Système de pilotage centralisé selon la revendication 3, dans lequel le module d'entrée/sortie et les contacteurs de puissance (3) sont disposés dans le coffret annexe (6).

7. Système de pilotage centralisé selon la revendication 5 ou 6, dans lequel la communication entre l'unité de commande (1) et l'unité de pilotage (2) est réalisée via une liaison filaire supportant un protocole de communication industriel.

8. Système de pilotage centralisé selon l'une des revendications 1 à 7, dans lequel l'interface utilisateur (10) présente en outre des moyens permettant à l'utilisateur d'indiquer à l'unité de pilotage (1) de forcer l'alimentation électrique de ces équipements à piloter.

9. Système de pilotage centralisé selon l'une des revendications 1 à 8, dans lequel le secteur tertiaire est celui de la restauration, et les équipements à piloter comprennent tout ou partie des équipements électriques installés dans un restaurant parmi lesquels friteuse, extracteur d'air VMC, cumulus, machine à glaçon, éclairage de salle, grill, station de séchage de vaisselles, table de cuisson.
